# EUROPEAN PATENT APPLICATION

(11) **EP 4 509 534 A1**
(43) Date of publication of application: **19.02.2025**
(21) Application number: 23788167.7
(22) Date of filing: 29.03.2023
(51) Int. Cl.: C08F 8/42, C08L 47/00

(54) **SILANE-MODIFIED COPOLYMER, METHOD FOR PRODUCING SAME, AND COMPOSITION CONTAINING SAME**

(30) Priority: 11.04.2022 JP 2022064887
(71) Applicant: SHIN-ETSU CHEMICAL CO., LTD., Tokyo 1000005 (JP)
(72) Inventor: HIROKAMI Munenao, Annaka-shi, Gunma 379-0224 (JP); KATAYAMA Taiki, Annaka-shi, Gunma 379-0224 (JP)
(74) Representative: Mewburn Ellis LLP
(86) International application number: PCT/JP2023/012843
(87) International publication number: WO 2023/199747

(57) **Abstract**

Provided is a silane-modified copolymer comprising: a constituent unit expressed by formulae (1) and (2) below; and an epoxy-group containing constituent unit. 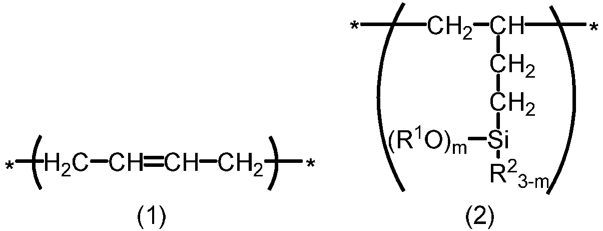 (In the formulae, R¹ independently represents an alkyl group having 1-10 carbon atoms or an aryl group having 6-20 carbon atoms, R² independently represents an alkyl group having 1-10 carbon atoms or an aryl group having 6-20 carbon atoms, m represents an integer of 1-3, and the asterisk * represents a bond to an adjacent constituent unit. The constituent units can be arranged in any order.)

## Description

### TECHNICAL FIELD

The present invention relates to a silane-modified copolymer, a method for preparing the same, and a composition containing the copolymer. More particularly, the invention relates to a copolymer which has epoxy groups and hydrolyzable silyl groups and which also has a polybutadiene skeleton, a method for preparing the same, and a composition containing the copolymer.

### BACKGROUND ART

Organosilicon compounds which contain both a functional group having reactivity with organic materials, such as an epoxy group, amino group, acryloyl group, methacryloyl group, mercapto group or isocyanato group or an acid anhydride residue, and also a functional group which reacts with inorganic materials, such as a hydrolyzable silyl group, are generally called silane coupling agents and act as a medium for bonding together organic materials and inorganic materials that generally are difficult to bond.

Utilizing such properties, silane coupling agents are widely employed as, for example, organic material and inorganic material modifiers, bonding agents which can be used for bonding together both materials, and various types of additives.

Among these, 3-glycidoxypropyltrimethoxysilane is commonly used as an epoxy functional group-containing silane coupling agent and its effectiveness has been demonstrated in a broad range of applications. However, it is a monomer and, given its high volatility and concerns over safety, a material of low volatility is desired.

Prior-art documents relating to this invention include the following.

### PRIOR ART DOCUMENTS

### PATENT DOCUMENTS

Patent Document 1: JP-A 2009-191155

### SUMMARY OF INVENTION

### TECHNICAL PROBLEM

In light of the above, the object of the present invention is to provide an epoxy group-containing silane-modified copolymer which has a high adhesion to base materials and moreover has a low volatility.

### SOLUTION TO PROBLEM

The inventors have conducted intensive investigations in order to achieve the above object. As a result, they have discovered that specific copolymers having epoxy groups and hydrolyzable silyl groups and also having a polybutadiene skeleton possess a low volatility and have a high adhesion to base materials. This discovery ultimately led to the present invention.

Accordingly, the invention provides:
1. A silane-modified copolymer comprising constitutional units of formula (1) and formula (2) below 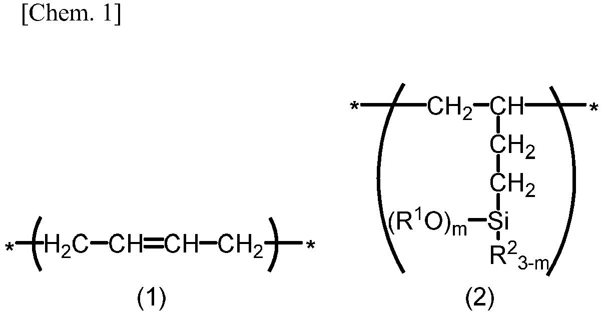 (wherein each asterisk * represents a bond to a neighboring constitutional unit and, in formula (2), each R¹ is independently an alkyl group of 1 to 10 carbon atoms or an aryl group of 6 to 20 carbon atoms, each R² is independently an alkyl group of 1 to 10 carbon atoms or an aryl group of 6 to 20 carbon atoms and m is an integer from 1 to 3, with the proviso that the respective constitutional units are arranged in any order) and an epoxy group-containing constitutional unit;
2. The silane-modified copolymer of 1 above, wherein the epoxy group-containing constitutional unit is of one or more type selected from constitutional units of formulas (3) and (4) below 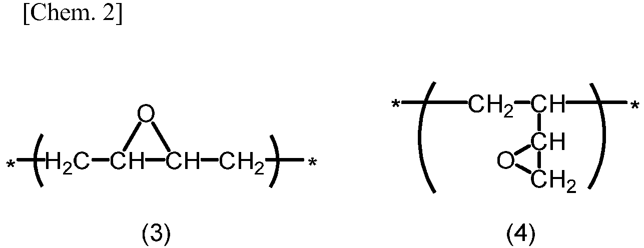 (wherein each asterisk * has the same meaning as above);
3. A method for preparing the silane-modified copolymer of 1 above, comprising the step of subjecting a copolymer containing constitutional units of formulas (1) and (5) below 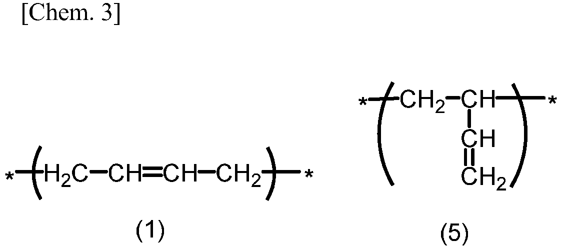 (wherein each asterisk * has the same meaning as above) and an epoxy group-containing constitutional unit, the respective constitutional units being arranged in any order, to a hydrosilylation reaction with an organosilicon compound of formula (6) below 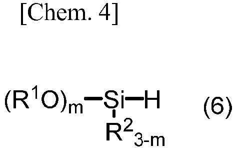 (wherein R¹, R² and m are as defined above) in the presence of a platinum compound-containing catalyst;
4. The silane-modified copolymer preparation method of 3 above, wherein the epoxy group-containing constitutional unit is of one or more type selected from constitutional units of formulas (3) and (4) below 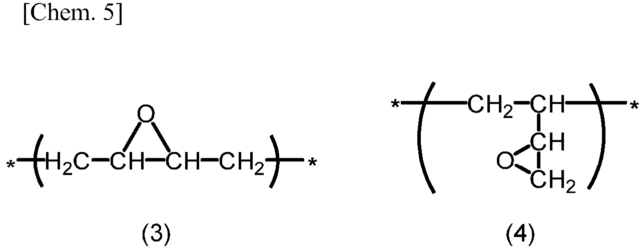 (wherein each asterisk * has the same meaning as above);
5. A composition containing the silane-modified copolymer of 1 or 2 above; and
6. The composition of 5 above which contains an organopolysiloxane.

### ADVANTAGEOUS EFFECTS OF INVENTION

The silane-modified copolymer of the invention has epoxy groups, hydrolyzable silyl groups and a polybutadiene skeleton. It has a low volatility and, when included in a composition, is able to manifest a high adhesion.

### DESCRIPTION OF EMBODIMENTS

The invention is described in detail below.

### [1] Silane-Modified Copolymer

The silane-modified copolymer of the invention includes units of formula (1) below which make up polybutadiene, hydrolyzable silyl group-containing constitutional units of formula (2), and epoxy group-containing constitutional units. The respective constitutional units are arranged in any order.

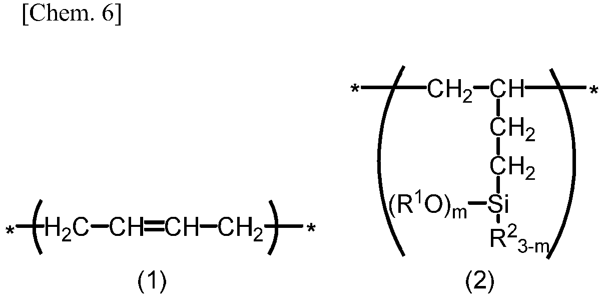

In the formulas, each asterisk * represents a bond to a neighboring constitutional unit.

Here, in formula (2), each R¹ is independently an alkyl group of 1 to 10 carbon atoms, preferably 1 to 8 carbon atoms, and more preferably 1 to 6 carbon atoms, or an aryl group of 6 to 20 carbon atoms, preferably 6 to 15 carbon atoms, and more preferably 6 to 10 carbon atoms; each R² is independently an alkyl group of 1 to 10 carbon atoms, preferably 1 to 8 carbon atoms, and more preferably 1 to 6 carbon atoms, or an aryl group of 6 to 20 carbon atoms, preferably 6 to 15 carbon atoms, and more preferably 6 to 10 carbon atoms; and m is an integer from 1 to 3.

The alkyl groups of 1 to 10 carbon atoms represented by R¹ and R² may be linear, branched or cyclic. Specific examples include methyl, ethyl, n-propyl, i-propyl, n-butyl, s-butyl, t-butyl, n-pentyl, n-hexyl, n-heptyl, n-octyl, n-nonyl, n-decyl, cyclopropyl, cyclobutyl, cyclopentyl, cyclohexyl, cycloheptyl and cyclooctyl groups.

Specific examples of the aryl groups of 6 to 20 carbon atoms represented by R¹ and R² include phenyl, α-naphthyl and β-naphthyl groups.

Among these, R¹ is preferably a linear alkyl group, and more preferably a methyl or ethyl group.

R² is preferably a linear alkyl group, and more preferably a methyl or ethyl group.

The letter m is an integer from 1 to 3, preferably 2 or 3, and more preferably 3.

In the silane-modified copolymer of the invention, the epoxy group-containing constitutional unit is not particularly limited so long as it includes an epoxy group and is capable of making up, together with the constitutional units of formulas (1) and (2), a copolymer. One or more type selected from constitutional units of formulas (3) and (4) below is preferred; both are more preferred. 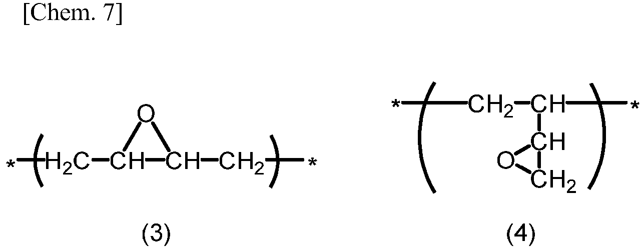 In the formulas, each asterisk * represents a bond to a neighboring constitutional unit.

In the silane-modified copolymer of the invention, of the overall number of constitutional units making up the silane-modified copolymer, the total number of constitutional units represented by formulas (1) and (2) is preferably at least 30 mol%, and more preferably at least 40 mol%. Although there is no particular upper limit, the total number of constitutional units represented by formulas (1) and (2) is preferably 90 mol% or less.

In particular, to further increase the effects of the silane-modified copolymer of the invention as a bonding agent, of the overall number of constitutional units making up the silane-modified copolymer, the proportion of constitutional units having the hydrolyzable silyl group of formula (2) is preferably 2 mol% or more, and more preferably 4 mol% or more. Although there is no particular upper limit, this is preferably not more than 25 mol%.

The proportion of the sum of the epoxy group-containing constitutional units of (3) and (4) is preferably at least 0.5 mol%, and more preferably at least 1 mol%. Although there is no particular upper limit, this is preferably not more than 30 mol%. The sum of the respective constitutional units making up the silane-modified copolymer is 100 mol%.

The silane-modified copolymer of the invention may include other constitutional units in addition to the constitutional units of above formulas (1) to (4). Specific examples of such other constitutional units include constitutional units of formula (5) below and constitutional units of formula (7) below. When such other constitutional units are included, the combined ratio thereof is preferably 50 mol% or less, and more preferably 45 mol% or less, of the overall number of constitutional units making up the silane-modified copolymer. In cases where such other constitutional units are included, the respective constitutional units are arranged in any order. Here too, the sum of the respective constitutional units making up the silane-modified copolymer is 100 mol%. 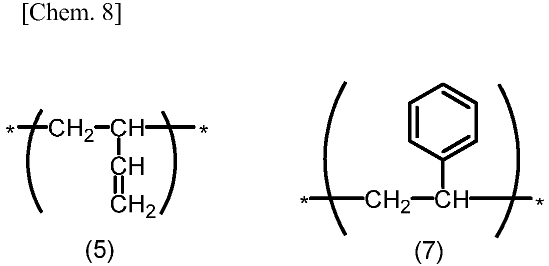 In these formulas, each asterisk * represents a bond to a neighboring constitutional unit.

The silane-modified copolymer of the invention has a number-average molecular weight which, although not particularly limited, is preferably at least 500, and more preferably at least 1,000. The number-average molecular weight has an upper limit which is preferably not more than 10,000, and more preferably not more than 5,000.

The number-average molecular weight is a polystyrene-equivalent value obtained by gel permeation chromatography (GPC).

### [2] Method of Preparation

The silane-modified copolymer of the invention can be obtained by subjecting a starting copolymer containing constitutional units of formulas (1) and (5) below and an epoxy group-containing constitutional unit to a hydrosilylation reaction with an organosilicon compound of formula (6) below in the presence of a platinum compound-containing catalyst. The respective constitutional units may be arranged in any order. 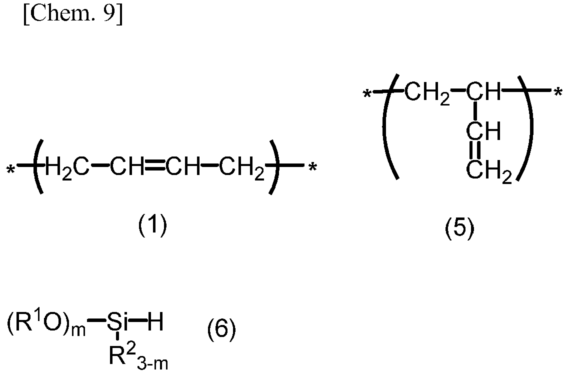 In these formulas, the asterisks *, R¹, R² and m are as defined above.

In the starting copolymer as well, the structure of the epoxy group-containing constitutional unit is not particularly limited so long as this constitutional unit contains epoxy groups and can, together with the constitutional units of formulas (1) and (5), make up a copolymer. One or more type of unit selected from constitutional units of formulas (3) and (4) below is preferred; both of these are more preferred. 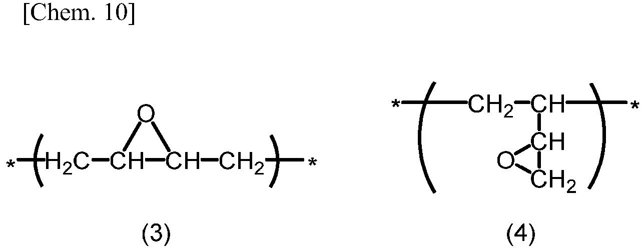 In these formulas, each asterisk * is as defined above.

The copolymer which includes constitutional units of formulas (1) and (5) and epoxy group-containing constitutional units can be acquired as a commercial product. For example, Ricon 657 (from Cray Valley), JP-100 and JP-200 (both from Nippon Soda Co., Ltd.), Epolead PB4700 (Daicel Corporation) and Adeka Cizer BF-1000 (from ADEKA) are available on the market.

Use can also be made of, for example, a copolymer obtained by epoxidizing some of the unsaturated bonds on a copolymer such as Ricon 130 (from Cray Valley) having constitutional units of above formulas (1) and (5).

The organosilicon compound of above formula (6) is exemplified by trimethoxysilane, triethoxysilane, dimethoxymethylsilane and diethoxymethylsilane.

The starting copolymer and the organosilicon compound of formula (6) are reacted in proportions of preferably from 0.01 to 3 moles, and more preferably from 0.05 to 1 mole, of the organosilicon compound of formula (6) per mole of the constitutional units of formula (5) in the starting copolymer.

The platinum compound-containing catalyst used in the above hydrosilylation reaction is not particularly limited. Specific examples include chloroplatinic acid, alcohol solutions of chloroplatinic acid, toluene or xylene solutions of a platinum-1,3-divinyl-1,1,3,3-tetramethyldisiloxane complex, tetrakis(triphenylphosphine)platinum, dichlorobis(triphenylphosphine)platinum, dichlorobis(acetonitrile)platinum, dichlorobis(benzonitrile)platinum, dichloro(cyclooctadiene)platinum and supported catalysts such as platinum-carbon, platinum-alumina and platinum-silica.

Of these, in terms of the selectivity during hydrosilylation, a zero-valent platinum complex is preferred, and a toluene or xylene solution of a platinum-1,3-divinyl-1,1,3,3-tetramethyldisiloxne complex is more preferred.

Although the amount of platinum compound-containing catalyst used is not particularly limited, from the standpoint of the reactivity, productivity and the like, the amount is such that the platinum atoms included per mole of the organosilicon compound of formula (6) is preferably from 1×10⁻⁸ to 1×10⁻² mole, and more preferably from 1×10⁻⁷ to 1×10⁻³ mole.

A co-catalyst may be used in the above hydrosilylation reaction. Exemplary co-catalysts include ammonium salts of inorganic acids, acid amide compounds and carboxylic acids.

Specific examples of ammonium salts of inorganic acids include ammonium chloride, ammonium sulfate, ammonium amidosulfate, ammonium nitrate, ammonium dihydrogen phosphate, diammonium hydrogen phosphate, triammonium phosphite, ammonium diphosphate, ammonium carbonate, ammonium bicarbonate, ammonium sulfate, ammonium borate and ammonium borofluoride. Of these, an ammonium salt of an inorganic acid having a pKa of 2 or more is preferred; ammonium carbonate and ammonium bicarbonate are more preferred.

Specific examples of acid amide compounds include formamide, acetamide, N-methylacetamide, N,N-dimethylacetamide, propionamide, acrylamide, malonamide, succinamide, maleamide, fumaramide, benzamide, phthalamide, palmitamide and stearamide.

Specific examples of carboxylic acids include acetic acid, propionic acid, butyric acid, methoxyacetic acid, pentanoic acid, caproic acid, heptanoic acid, octanoic acid, lactic acid and glycolic acid. Of these, formic acid, acetic acid and lactic acid are preferred. Acetic acid is more preferred.

When use is made of a co-catalyst, although the amount of co-catalyst used is not particularly limited, from the standpoints of reactivity, selectivity and cost, the amount is preferably from 1×10⁻⁵ to 1×10⁻¹ mole, and more preferably from 1×10⁻⁴ to 5×10⁻¹ mole, per mole of the organosilicon compound of general formula (6).

The above reaction proceeds even in the absence of a solvent, although use can also be made of a solvent.

Specific examples of solvents that may be used include hydrocarbon solvents such as pentane, hexane, cyclohexane, heptane, isooctane, benzene, toluene and xylene; ether solvents such as diethyl ether, tetrahydrofuran and dioxane; ester solvents such as ethyl acetate and butyl acetate; aprotic polar solvents such as N,N-dimethylformamide; and chlorinated hydrocarbon solvents such as dichloromethane and chloroform. One of these solvents may be used alone or two or more may be used in admixture.

The reaction temperature in the above hydrosilylation reaction is not particularly limited. Reaction may be carried out under temperature conditions ranging from 0°C to under the application of heat, although a temperature of between 0°C and 200°C is preferred.

Reaction under heating is preferred for obtaining a suitable reaction rate. From this standpoint, the reaction temperature is more preferably between 40°C and 110°C, and even more preferably between 40°C and 90°C.

The reaction time also is not particularly limited, and is generally from about 1 hour to about 60 hours, although the reaction time is preferably from 1 to 30 hours, and more preferably from 1 to 20 hours.

In general, epoxy group-containing organosilicon compounds adhere to inorganic base materials such as glass and metal. However, the silane-modified copolymer of the invention can be suitably used as an adhesion promoter for not only inorganic base materials such as glass and metal, but also for organic base materials such as plastics and rubbers.

### [3] Composition

The composition of the invention includes the above silane-modified copolymer, The silane-modified copolymer of the invention is a compound that has a high molecular weight. Because it has a plurality of hydrolyzable silyl groups and epoxy groups on the molecule, by including it in a specific amount within, for example, an epoxy resin composition, a urethane resin composition, an acrylic resin composition, a polyimide resin composition or a silicone composition such as a silicone resin composition or a modified silicone resin composition, adherence and adhesion comparable to or better than conventional epoxy group-containing organosilicon compounds can be expected. Of these, inclusion in a silicone composition is preferred.

The amount of silane-modified copolymer included in the inventive composition is not particularly limited, but is preferably from 0.1 to 20 wt%, and more preferably from 0.1 to 10 wt%, of the overall composition.

In cases where the silane-modified copolymer of the invention is included in a silicone composition, a known product may be used as the silicone composition. For example, a silicone composition containing a linear organopolysiloxane capped at both ends of the molecular chain with hydroxyl groups and a curing catalyst may be used.

Specific examples of linear organopolysiloxanes capped at both ends of the molecular chain with hydroxyl groups include dimethylpolysiloxanes capped at both ends of the molecular chain with hydroxyl groups, methylphenylpolysiloxanes capped at both ends of the molecular chain with hydroxyl groups and methylvinylpolysiloxanes capped at both ends of the molecular chain with hydroxyl groups.

These organopolysiloxanes have a viscosity at 25°C which is preferably from 300 to 500,000 mPa-s, more preferably from 500 to 100,000 mPa-s, and even more preferably from 1,000 to 80,000 mPa·s. The above viscosity can be measured with a rotational viscometer. These organopolysiloxanes may be used singly or two or more of differing structures or molecular weights may be used in combination.

It is preferable to use an organometallic catalyst as the curing catalyst. Examples of organometallic catalysts include alkyltin ester compounds such as dibutyltin diacetate, dibutyltin dilaurate and dibutyltin dioctoate; titanic acid esters or titanium chelate compounds such as tetraisopropoxytitanium, tetra-n-butoxytitanium, tetrakis(2-ethylhexoxy)titanium, dipropoxybis(acetylacetonato)titanium and titanium isopropoxyoctylene glycol; zinc naphthenate, zinc stearate and zinc 2-ethyloctoate; iron 2-ethylhexoate, cobalt 2-ethylhexoate and cobalt naphthenate; manganese 2-ethylhexoate; alkoxyaluminum compounds and aluminum chelate compounds. One of these may be used alone or two or more may be used in combination.

The amount of curing catalyst included per 100 parts by weight of the organopolysiloxane is preferably from 0.01 to 15 parts by weight, and more preferably from 0.01 to 5 parts by weight.

Where necessary, additional ingredients, including hydrolyzable silanes such as methyltri(methyl ethyl ketoxime)silane and/or partial hydrolytic condensates thereof, fillers such as silica, silane coupling agents and organopolysiloxanes other than the above, may be added to the composition of the invention.

The inventive composition can be prepared by mixing the above ingredients in the usual manner.

A coated base material can be obtained by applying the inventive composition to the surface of various types of base material and curing the composition to form a coating layer. Alternatively, a bonded laminate can be obtained by applying the inventive composition to the surface of a base material, superimposing another base material thereon, and then curing the composition to form a bonding layer.

The method for applying the inventive composition is not particularly limited. Specific examples include known methods such as spray coating, spin coating, dip coating, roller coating, brush coating, bar coating and flow coating. Any of these methods may be suitably selected and used.

The base material is not particularly limited. Specific examples include the following organic resin base materials: polypropylene resins, polyester resins such as poly(ethylene terephthalate) and poly(butylene terephthalate), polystyrene resins, acrylic resins such as poly(methyl methacrylate), polyethylene resins, polyamide resins such as nylon, acrylonitrile-butadiene-styrene resins and polyphenylene sulfide resins; rubber base materials such as urethane rubber and butadiene rubber; metal base materials; paint-coated surfaces; glass; ceramic; concrete; slate slabs; textiles; inorganic fillers such as (hollow) silica, titania, zirconia and alumina; and glass fibers and glass fiber products such as glass cloth, glass tape, glass mats and glass paper. The shape of the base material is not particularly limited.

The curing reaction temperature and time may be suitably modified according to, for example, the base material used. Generally, from the standpoint of workability and other considerations, the curing reaction temperature is preferably a normal temperature close to 23°C. However, to promote the curing reaction, curing may be effected by heating within a temperature range that does not exceed the heat-resisting temperature of the base material used. From the standpoint of workability and other considerations, the curing reaction time is generally from about one minute to about one week.

### EXAMPLES

Examples of the invention and Comparative Examples are given below by way of illustration, although the invention is not limited by these Examples.

In the Examples below, "parts" refers to parts by weight. The molecular weight is the polystyrene-equivalent number-average molecular weight determined by GPC measurement. The viscosity is a value measured at 25°C using a rotational viscometer.

### [1] Preparation of Silane-Modified Copolymer

### [Example 1-1]

A one-liter separable flask equipped with a stirrer, a reflux condenser, a dropping funnel and a thermometer was charged with 540 g of Ricon 657 (from Cray Valley; number-average molecular weight, 2,200; consisting of constitutional units of formulas (1), (3), (4) and (5) below in the molar ratio (1)/[(3)+(4)]/(5) = 30/20/50) and a toluene solution of aplatinum-1,3-divinyl-1,1,3,3-tetramethyldisiloxane complex (1×10⁻⁵ mol in terms of the platinum atoms), and 244 g of trimethoxysilane was added dropwise over a period of one hour at an internal temperature of between 75°C and 85°C. Three hours of aging at 80°C was then carried out. Following the completion of aging, the system was concentrated in vacuo and filtered, giving Silane-Modified Copolymer A as a light yellow liquid having a viscosity of 300,000 mPa·s and a number-average molecular weight of 3,200. The resulting Silane-Modified Copolymer A consisted of constitutional units of formulas (1), (2'), (3), (4) and (5) below in the molar ratio (1)/[(3)+(4)]/(2')/(5) = 30/20/20/30. 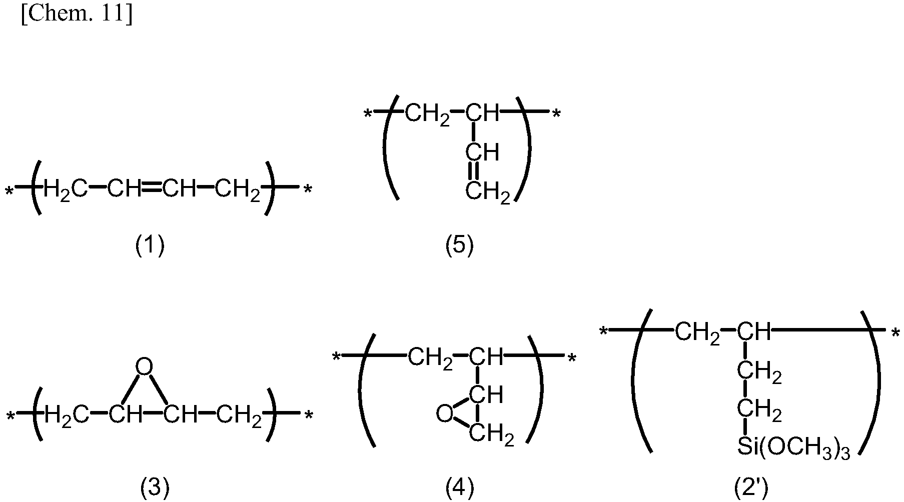 In the formulas, each asterisk * has the same meaning as above.

### [Example 1-2]

A one-liter separable flask equipped with a stirrer, a reflux condenser, a dropping funnel and a thermometer was charged with 540 g of Ricon 657 (from Cray Valley; number-average molecular weight, 2,200; consisting of constitutional units of above formulas (1), (3), (4) and (5) in the molar ratio (1)/[(3)+(4)]/(5) = 30/20/50) and a toluene solution of a platinum-1,3-divinyl-1,1,3,3-tetramethyldisiloxane complex (1×10⁻⁵ mol in terms of the platinum atoms), and 122 g of trimethoxysilane was added dropwise over a period of one hour at an internal temperature of between 75°C and 85°C. Three hours of aging at 80°C was then carried out. Following the completion of aging, the system was concentrated in vacuo and filtered, giving Silane-Modified Copolymer B as a light yellow liquid having a viscosity of 270,000 mPa·s and a number-average molecular weight of 2,700. The resulting Silane-Modified Copolymer B consisted of constitutional units of above formulas (1), (2'), (3), (4) and (5) in the molar ratio (1)/[(3)+(4)]/(2')/(5) = 30/20/10/40.

### [Example 1-3]

A one-liter separable flask equipped with a stirrer, a reflux condenser, a dropping funnel and a thermometer was charged with 540 g of a copolymer obtained by partially epoxidizing Ricon 130 from Cray Valley (number-average molecular weight of epoxidized copolymer, 2,700; consisting of constitutional units of above formulas (1), (3), (4) and (5) in the molar ratio (1)/[(3)+(4)]/(5) = 71/1/28) and a toluene solution of a platinum-1,3-divinyl-1,1,3,3-tetramethyldisiloxane complex (1×10⁻⁵ mol in terms of the platinum atoms), and 244 g of trimethoxysilane was added dropwise over a period of one hour at an internal temperature of between 75°C and 85°C. Three hours of aging at 80°C was then carried out. Following the completion of aging, the system was concentrated in vacuo and filtered, giving Silane-Modified Copolymer C as a light yellow liquid having a viscosity of 1,800 mPa-s and a number-average molecular weight of 3,800. The resulting Silane-Modified Copolymer C consisted of constitutional units of above formulas (1), (2'), (3), (4) and (5) in the molar ratio (1)/[(3)+(4)]/(2')/(5) = 71/1/18/10.

### [Example 1-4]

A one-liter separable flask equipped with a stirrer, a reflux condenser, a dropping funnel and a thermometer was charged with 540 g of a copolymer obtained by partially epoxidizing Ricon 130 from Cray Valley (number-average molecular weight of epoxidized copolymer, 2,700; consisting of constitutional units of above formulas (1), (3), (4) and (5) in the molar ratio (1)/[(3)+(4)]/(5) = 71/1/28) and a toluene solution of a platinum-1,3-divinyl-1,1,3,3-tetramethyldisiloxane complex (1×10⁻⁵ mol in terms of the platinum atoms), and 122 g of trimethoxysilane was added dropwise over a period of one hour at an internal temperature of between 75°C and 85°C. Three hours of aging at 80°C was then carried out. Following the completion of aging, the system was concentrated in vacuo and filtered, giving Silane-Modified Copolymer D as a light yellow liquid having a viscosity of 1,800 mPa·s and a number-average molecular weight of 3,300. The resulting Silane-Modified Copolymer D consisted of constitutional units of above formulas (1), (2'), (3), (4) and (5) in the molar ratio (1)/[(3)+(4)]/(2')/(5) = 71/1/9/19.

### [Example 1-5]

A one-liter separable flask equipped with a stirrer, a reflux condenser, a dropping funnel and a thermometer was charged with 540 g of a copolymer obtained by partially epoxidizing Ricon 130 from Cray Valley (number-average molecular weight of epoxidized copolymer, 2,700; consisting of constitutional units of above formulas (1), (3), (4) and (5) in the molar ratio (1)/[(3)+(4)]/(5) = 71/1/28) and a toluene solution of a platinum-1,3-divinyl-1,1,3,3-tetramethyldisiloxane complex (1×10⁻⁵ mol in terms of the platinum atoms), and 61 g of trimethoxysilane was added dropwise over a period of one hour at an internal temperature of between 75°C and 85°C. Three hours of aging at 80°C was then carried out. Following the completion of aging, the system was concentrated in vacuo and filtered, giving Silane-Modified Copolymer E as a light yellow liquid having a viscosity of 1,700 mPa-s and a number-average molecular weight of 3,000. The resulting Silane-Modified Copolymer E consisted of constitutional units of above formulas (1), (2'), (3), (4) and (5) in the molar ratio (1)/[(3)+(4)]/(2')/(5) = 71/1/5/23.

### [2] Evaluation of Silane-Modified Copolymer Volatility

The volatilities of Silane-Modified Copolymers A to E obtained in Examples 1-1 to 1-5 and Organosilicon Compound F below (Comparative Example 1-1) were evaluated. Organosilicon Compound F: 3-glycidoxypropyltrimethoxysilane (KBM-403, from Shin-Etsu Chemical Co., Ltd.).

Evaluation was carried out in each case by adding dropwise 1 g of the compound to an aluminum Petri dish, letting the compound stand 3 hours in an open system within a thermostatic chamber at a temperature of 150°C, and treating the percent of compound remaining as the nonvolatile content. The higher the nonvolatile content, the lower the volatility of the compound. The evaluation results are shown in Table 1.

**[Table 1]**

| | Compound | Nonvolatile content (%) |
|---|---|---|
| Example 1-1 | Silane-Modified Copolymer A | 99 |
| Example 1-2 | Silane-Modified Copolymer B | 99 |
| Example 1-3 | Silane-Modified Copolymer C | 99 |
| Example 1-4 | Silane-Modified Copolymer D | 99 |
| Example 1-5 | Silane-Modified Copolymer E | 99 |
| Comparative Example 1-1 | Organosilicon Compound F | 0 |

It is apparent from Table 1 that the silane-modified copolymers obtained in Examples 1-1 to 1-5 have low volatilities.

Hence, the silane-modified copolymers of the invention are economical because vaporization during high-temperature application can be suppressed and the required properties can be manifested at the minimum necessary content. In addition, the contamination of nearby equipment can be suppressed, and so improved productivity can also be expected.

### [3] Preparation of Composition

### [Example 2-1]

Sixty parts of a dimethylpolysiloxane capped at both ends of the molecular chain with hydroxyl groups and having a viscosity of 50,000 mPa·s, 25 parts of a dimethylpolysiloxane capped at both ends of the molecular chain with trimethylsilyl groups and having a viscosity of 100 mPa-s and 10 parts of surface-modified silica were added and mixed together for 30 minutes under normal pressure, following which they were mixed again for 15 minutes under reduced pressure. Next, 0.5 part of Silane-Modified Copolymer A and 4 parts of methyltri(methyl ethyl ketoxime)silane were added and the system was mixed for 10 minutes under atmospheric pressure, following which it was mixed for 30 minutes under reduced pressure. Following the completion of mixing under reduced pressure, 0.1 part of dioctyltin dilaurate was added and mixing was carried out for 60 minutes under reduced pressure, giving the composition.

### [Example 2-2]

Aside from adding 0.5 part of Silane-Modified Copolymer B instead of Silane-Modified Copolymer A, Composition II was prepared in the same way as in Example 2-1.

### [Example 2-3]

Aside from adding 0.5 part of Silane-Modified Copolymer C instead of Silane-Modified Copolymer A, Composition III was prepared in the same way as in Example 2-1.

### [Example 2-4]

Aside from adding 0.5 part of Silane-Modified Copolymer D instead of Silane-Modified Copolymer A, Composition IV was prepared in the same way as in Example 2-1.

### [Example 2-5]

Aside from adding 0.5 part of Silane-Modified Copolymer E instead of Silane-Modified Copolymer A, Composition V was prepared in the same way as in Example 2-1.

### [Comparative Example 2-1]

Aside from not adding Silane-Modified Copolymer A, Composition VI was prepared in the same way as in Example 2-1.

### [Comparative Example 2-2]

Aside from adding 0.5 part of Organosilicon Compound F instead of Silane-Modified Copolymer A, Composition VII was prepared in the same way as in Example 2-1.

### [4] Evaluation of Composition Adhesion

The respective compositions prepared in Examples 2-1 to 2-5 and Comparative Examples 2-1 and 2-2 were applied to slabs of material (polyester resin, nylon 6 resin, urethane rubber and ABS resin) as the adherends and aged 7 days at 23°C and 50% RH, following which the adhesion was checked.

The adhesion was determined by the crosscut method (a peel test conducted with a piece of tape scored into a grid of 25 squares) in JIS K-5600. The results were rated as "○": good adhesion with no peeling, "Δ": some peeling occurred (peeled surface area was 30% or less), and "×": substantial peeling occurred (peeled surface area was greater than 30%). These results are shown in Table 2 below.

**[Table 2]**

| Adherend material | Example 2-1 | Example 2-2 | Example 2-3 | Example 2-4 | Example 2-5 | Comp. Ex. 2-1 | Comp. Ex. 2-2 |
|---|---|---|---|---|---|---|---|
| | Composition I | Composition II | Composition III | Composition IV | Composition V | Composition VI | Composition VII |
| Polyester resin | ○ | ○ | ○ | ○ | ○ | ○ | ○ |
| Nylon 6 resin | ○ | ○ | ○ | ○ | ○ | × | ○ |
| Urethane rubber | ○ | ○ | ○ | ○ | ○ | × | × |
| ABS resin | ○ | ○ | ○ | ○ | ○ | × | Δ |

As shown in Table 2, the silane-modified copolymers of Examples 2-1 to 2-5 exhibit adhesions comparable to or better than the conventional epoxy group-containing organosilicon compound of Comparative Example 2-2 (3-glycidoxypropyltrimethoxysilane).

## Claims

1. A silane-modified copolymer comprising constitutional units of formula (1) and formula (2) below 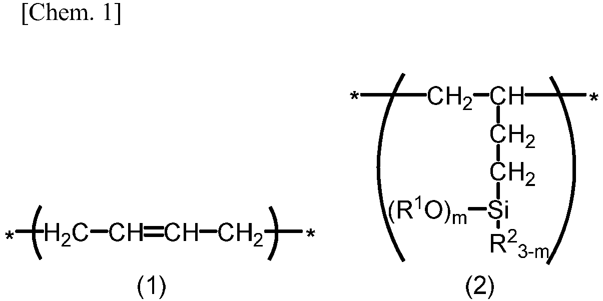 (wherein each asterisk * represents a bond to a neighboring constitutional unit and, in formula (2), each R¹ is independently an alkyl group of 1 to 10 carbon atoms or an aryl group of 6 to 20 carbon atoms, each R² is independently an alkyl group of 1 to 10 carbon atoms or an aryl group of 6 to 20 carbon atoms and m is an integer from 1 to 3, with the proviso that the respective constitutional units are arranged in any order) and an epoxy group-containing constitutional unit.

2. The silane-modified copolymer of claim 1, wherein the epoxy group-containing constitutional unit is of one or more type selected from constitutional units of formulas (3) and (4) below 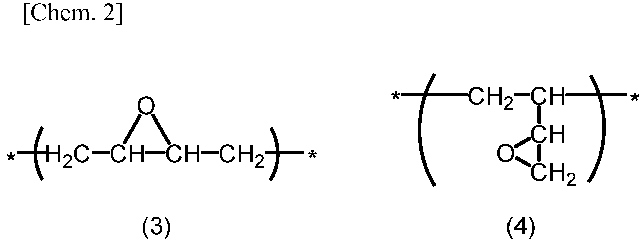 (wherein each asterisk * has the same meaning as above).

3. A method for preparing the silane-modified copolymer of claim 1, comprising the step of subjecting a copolymer containing constitutional units of formulas (1) and (5) below 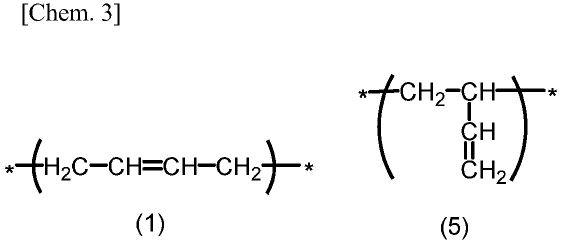 (wherein each asterisk * has the same meaning as above) and an epoxy group-containing constitutional unit, the respective constitutional units being arranged in any order, to a hydrosilylation reaction with an organosilicon compound of formula (6) below 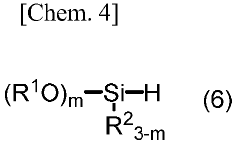 (wherein R¹, R² and m are as defined above) in the presence of a platinum compound-containing catalyst.

4. The silane-modified copolymer preparation method of claim 3, wherein the epoxy group-containing constitutional unit is of one or more type selected from constitutional units of formulas (3) and (4) below 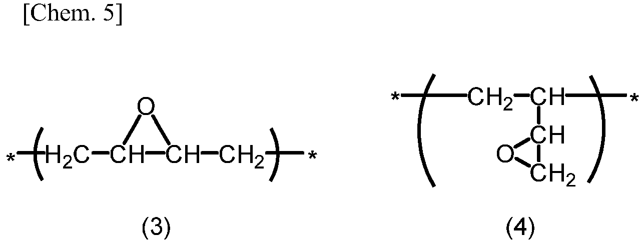 (wherein each asterisk * has the same meaning as above).

5. A composition containing the silane-modified copolymer of claim 1 or 2.

6. The composition of claim 5 which contains an organopolysiloxane.
